(19) **Europäisches Patentamt / European Patent Office / Office européen des brevets**

(11) **EP 2 591 222 B1**

(12) **EUROPEAN PATENT SPECIFICATION**

(45) Date of publication and mention
of the grant of the patent:
**01.03.2017 Bulletin 2017/09**

(21) Application number: **11757414.5**

(22) Date of filing: **06.07.2011**

(51) Int Cl.:
*F01N 3/18* (2006.01)      *F02D 41/02* (2006.01)
*F02D 33/02* (2006.01)      *F01N 9/00* (2006.01)
*F02D 41/30* (2006.01)      *F02D 41/40* (2006.01)
*F02B 37/18* (2006.01)

(86) International application number:
**PCT/IB2011/002039**

(87) International publication number:
**WO 2012/004673 (12.01.2012 Gazette 2012/02)**

(54) **FUEL INJECTION CONTROL OF AN INTERNAL COMBUSTION ENGINE**

KRAFTSTOFFEINSPRITZSTEUERUNG EINER BRENNKRAFTMASCHINE

COMMANDE D'INJECTION DE CARBURANT D'UN MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.07.2010 JP 2010154121**

(43) Date of publication of application:
**15.05.2013 Bulletin 2013/20**

(73) Proprietor: **TOYOTA JIDOSHA KABUSHIKI
KAISHA**
**Toyota-shi, Aichi-ken, 471-8571 (JP)**

(72) Inventor: **NOGI, Yoshito**
**Toyota-shi**
**Aichi-ken 471-8571 (JP)**

(74) Representative: **Cooney, Daniel Thomas**
**J A Kemp**
**14 South Square**
**Gray's Inn**
**London WC1R 5JJ (GB)**

(56) References cited:
**EP-A2- 1 087 122      EP-A2- 1 245 813**
**DE-C1- 19 750 226      US-A1- 2003 182 934**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The invention relates to a control device of an internal combustion engine, and in particular to control device and control method of an internal combustion engine in which the air-fuel ratio of in-cylinder gas is switched from lean to rich.

2. Description of Related Art

In order to regenerate a catalyst provided in an exhaust passage, for example, it is known to control the air-fuel ratio of in-cylinder gas to a ratio that is richer or smaller than the stoichiometric ratio (theoretical air-fuel ratio), and bum the in-cylinder gas, thereby to produce rich exhaust gas, and supply the exhaust gas to the catalyst.

In an internal combustion engine, such as a diesel engine, in which combustion takes place in a fuel-lean (excessive oxygen) condition; a NOx catalyst that reduces and purifies nitrogen oxides (NOx) is provided in the exhaust passage. As one type of the NOx catalyst, a storage reduction type NOx catalyst is known which stores NOx in exhaust gas when the exhaust air-fuel ratio is lean, and releases and reduces the stored NOx when the exhaust air-fuel ratio is rich (excessive fuel).

In the internal combustion engine of the above type, the air-fuel ratio of the in-cylinder gas is switched from lean to rich on a regular basis, so as to regularly release NOx stored in the storage reduction type NOx catalyst, and sulfur that is derived from sulfur (S) components in the fuel and deposited on the catalyst. Namely, a fuel-rich gas whose air-fuel ratio is richer than the stoichiometric ratio is burned in the cylinders (which will be called "in-cylinder rich combustion"), and the resulting rich exhaust gas is utilized so as to regenerate the catalyst.

Typically, during normal lean operation prior to switching of the air-fuel ratio, a main injection that would result in complete combustion of injected fuel is performed at or around the compression top dead center. The combustion resulting from the main injection will be called "main combustion".

On the other hand, during rich operation after switching of the air-fuel ratio, an after injection that would result in incomplete combustion of injected fuel may be performed at a time later than the main injection, in addition to the main injection.

In addition, intake air restriction may be carried out during the switching period from the start to the end of switching of the air-fuel ratio, so as to reduce the amount of intake air drawn into each cylinder, and make it easier to create a fuel-rich condition in the cylinder.

If the switching of the air-fuel ratio is conducted under the conditions as described above, the compression end temperature may be reduced during the switching period, and the main combustion may not be favorably accomplished. As a result, engine torque may be reduced and torque shock may occur during the switching period.

It is disclosed in Japanese Patent Application Publication No. 2008-309080 (JP-A-2008-309080) that exhaust fuel addition (i.e., addition of fuel into an exhaust passage) or post injection is performed in order to avoid misfiring of the fuel due to the excessive amount of the fuel, in an environment where the fuel is less likely to be burned, for example, at a high altitude or during the use of low cetane number fuel, while the engine is in a low-speed, low-load operating region. However, the exhaust fuel addition and the post injection provide a lower catalyst regeneration efficiency than the after injection, for reasons which will be described later; therefore, it is not a good idea to perform the exhaust fuel addition or post injection without performing the after injection.

EP 1087122 discloses an engine control system that causes a NOx trapping substance to release absorbed NOx by increasing an amount of fuel and spraying the fuel through primary injection which is made at a primary fuel injection timing near a dead top center or a compression stroke and post-fuel injection which is made at a post-fuel injecting timing between an expansion stroke and an exhaust stroke after said primary fuel injection with a retardation which is large at the beginning of implementation of the post-fuel injection and thereafter changed to be small.

EP 1245813 discloses an exhaust emission control system of an internal combustion engine capable of post injection is disclosed which provides control such that the injection timing in sub injection is set to a point earlier than the target injection timing when the sub injection is started, and the injection timing in the sub injection is then delayed to the target injection timing. This realizes the post injection under the optimum conditions and enables an efficient rise in the exhaust temperature while inhibiting deterioration of the drivability due to a rapid change in torque.

SUMMARY OF THE INVENTION

The present invention provides a control device for an internal combustion engine, which achieves favorable main combustion during an air-fuel ratio switching period, so that torque shock can be prevented in advance.

The control device of an internal combustion engine according to the invention is defined in claim 1.

The second after injection, which is set at a shorter interval from the main injection than the first after injection, is performed during the air-fuel ratio switching period, in a condition where the compression end temperature is still high; therefore, the fuel injected by the second after injection is favorably ignited, thus assuring good second after combustion.

With the second after injection thus performed, the exhaust temperature can be raised to a higher level, as compared with the case where the first after injection is performed. As a result, the in-cylinder temperature can be raised so as to compensate for reduction of the compression end temperature due to intake air restriction, and favorable main combustion can be achieved. If such favorable main combustion can be achieved, the resulting heat is utilized so as to achieve favorable second after combustion.

Thus, favorable main combustion can be achieved during the air-fuel ratio switching period, and torque shock due to reduction of the engine torque can be prevented in advance.

The control device of the internal combustion engine according to the above aspect of the invention may gradually delay the second after injection timing toward the first after injection timing, during the switching period. This arrangement makes it possible for the engine to make a smooth transition to the conditions after the end of switching.

In the control device of the internal combustion engine according to the above aspect of the invention, a fuel injection amount of the second after injection may be smaller than a fuel injection amount of the first after injection. In this case, the control device may gradually increase the fuel injection amount of the second after injection toward the fuel injection amount of the first after injection, during the switching period.

Also, the control device of the internal combustion engine according to the above aspect of the invention may advance at least one of the second main injection timing and the third main injection timing to be earlier than the first main injection timing. In this case, the control device may set the third main injection timing and the second main injection timing to the same injection timing, which is earlier than the first main injection timing. With this arrangement, misfiring of the main injection fuel (i.e., the fuel injected by the main injection) can be avoided, for example.

Also, the control device of the internal combustion engine according to the above aspect of the invention sets the fuel injection amount of the main injection after the end of the switching, to be smaller than the fuel injection amount of the main injection prior to the start of the switching. In this case, the control device gradually reduces the fuel injection amount of the main injection toward the amount after the end of the switching, during the switching period. This arrangement makes it possible for the engine to make a smooth transition to the conditions after the end of switching.

Also, the control device of the internal combustion engine according to the above aspect of the invention may keep the fuel injection amount of the main injection substantially equal to the amount prior to the start of the switching, during the switching period. With this arrangement, the main combustion can be stabilized during the switching period, and favorable second after combustion can be achieved.

In the control device of the internal combustion engine according to the above aspect of the invention, the first after injection timing may be within a range of 40°ATDC to 90°ATDC, and the second after injection timing may be within a range of 20°ATDC to 40°ATDC.

In the control device of the internal combustion engine according to the above aspect of the invention, the control device may perform switching of the air-fuel ratio when the internal combustion engine operates at a low load that is equal to or lower than a predetermined value. In this connection, the predetermined value may be 20% of the maximum load of the internal combustion engine. This is because it is difficult to achieve favorable main combustion, particularly in a low-load operating region, and torque shock is likely to occur in this region.

Also, the control device of the internal combustion engine according to the above aspect of the invention may start the intake air restriction at the same time as the start of switching of the air-fuel ratio, and may complete the switching of the air-fuel ratio at the same time as the end of the intake air restriction.

Also, the control device of the internal combustion engine according to the above aspect of the invention may perform switching of the air-fuel ratio so as to regenerate a catalyst provided in an exhaust passage.

A control method for controlling an internal combustion engine according to a second aspect of the invention, wherein an air-fuel ratio of in-cylinder gas is switched from a first air-fuel ratio for normal operation, which is learner than the stoichiometric ratio, to a second air-fuel ratio that is richer than the stoichiometric ratio, while intake air restriction is carried out during a switching period from the start of the switching to the end thereof, includes the steps of: prior to the start of the switching, performing a main injection that results in complete combustion of injected fuel, at a first main injection timing that is at or around a compression top dead center or before the compression top dead center, after the end of the switching, performing the main injection at a second main injection timing that is at or around the compression top dead center or before the compression top dead center, and performing a first after injection that results in incomplete combustion of injected fuel, at a first after injection timing that is later than the first main injection timing, and, during the switching period, performing the main injection at a third main injection timing that is at or around the compression top dead center or before the compression top dead center, and performing a second after injection that results in incomplete combustion of injected fuel, at a second after injection timing that is later than the first main injection timing and is earlier than the first after injection timing.

According to the control method of the internal combustion engine according to the second aspect of the invention, substantially the same effects as those of the control device of the internal combustion engine according to the first aspect of the invention can be provided.

According to the above aspects of the invention, excellent effects can be provided; namely, favorable main combustion can be achieved during the air-fuel ratio switching period, and torque shock can be prevented in advance.

BRIEF DESCRIPTION OF THE DRAWINGS

Features, advantages, and technical and industrial significance of the invention will be described below with reference to the accompanying exemplary drawings, in which like numerals denote like elements, and wherein:

FIG. 1 is a schematic view showing an internal combustion engine having a control device;
FIG. 2 is a time chart showing a comparative example to the control device of Fig. 1;
FIG. 3A through FIG. 3E are views showing a first example of the use of the control device of Fig. 1;
FIG. 4A through FIG. 4F are views showing a second example of the use of the control device of Fig. 1 in accordance with the invention;
FIG. 5A through FIG. 5F are views showing a third example of the use of the control device of Fig. 1;
FIG. 6A through FIG. 6F are views showing a fourth example of the use of the control device of Fig. 1 in accordance with the invention;
FIG. 7 is a view useful for explaining the manner of changing respective values in the examples;
FIG. 8 is a view showing a map used when calculating the delay amount of the second after injection timing;
FIG. 9 is a view showing a map used when calculating the amount of increase of the second after injection amount;
FIG. 10 is a view showing a map used when calculating the amount of increase of the main injection amount;
FIG. 11 is a view showing a torque conversion map for use in the examples;
FIG. 12 is a flowchart of a routine for calculating the main injection amount; and
FIG. 13 is a flowchart of a routine for calculating the second after injection amount.

DETAILED DESCRIPTION

The invention will be described in detail with reference to the accompanying drawings. In the following description, the air-fuel ratio may be called "A/F". Also, "absorption" or "adsorption" may be used as a term having substantially the same meaning as "storage".

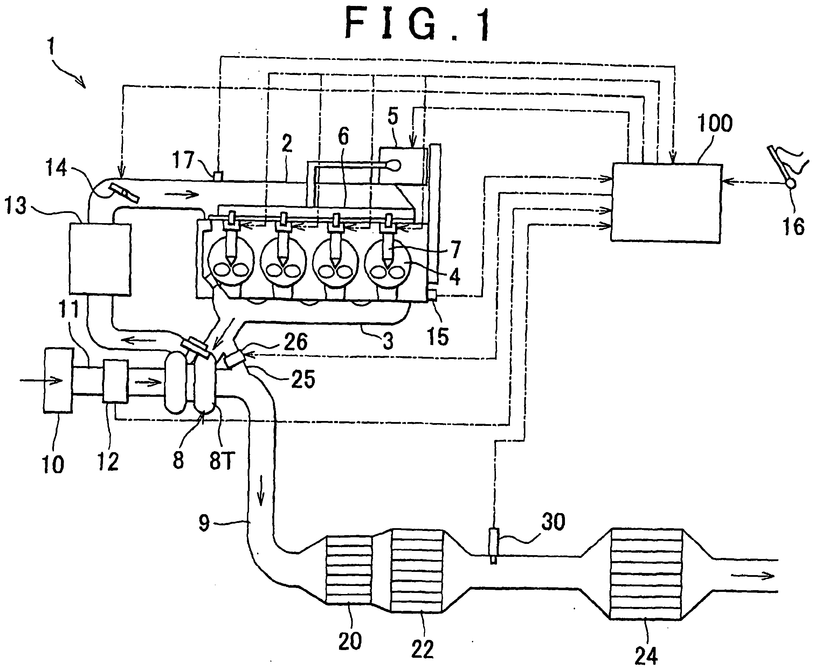

FIG. 1 schematically shows an internal combustion engine having a control device. The internal combustion engine shown in FIG. 1 is a compression ignition type internal combustion engine 1 (i.e., diesel engine) for use in an automobile. In the engine 1, an intake manifold 2 communicates with intake ports, and an exhaust manifold 3 communicates with exhaust ports. A combustion chamber 4 is defined by each cylinder and a corresponding piston, and "in-cylinder" means "the interior of the combustion chamber". Fuel supplied from a fuel tank (not shown) to a high-pressure pump 5 is fed under pressure to a common rail 6 by means of the high-pressure pump 5, to be stored in the common rail 6 in a high-pressure condition, and the high-pressure fuel in the common rail 6 is directly injected/supplied from respective injectors 7 into the corresponding combustion chambers 4.

Exhaust gas emitted from the engine 1 passes through the exhaust manifold 3 and a turbocharger 8, and then flows into an exhaust passage 9 located downstream of the turbocharger 8, so that the exhaust gas is purified or cleaned as will be described later, and then discharged to the atmosphere. A bypass passage 25 that bypasses the turbocharger 8 and a bypass valve 26 that opens or closes the bypass passage 25 are provided.

On the other hand, intake air drawn into an intake passage 11 through an air cleaner 10 passes through an air flow meter 12, turbocharger 8, intercooler 13, and a throttle valve 14, in the order of description, and reaches the intake manifold 2. The air flow meter 12 is an intake air amount sensor for detecting the mass airflow (the amount of intake air), and, more specifically, generates a signal commensurate with the flow rate of intake air. An electronically controlled throttle valve is employed as the throttle valve 14.

In the exhaust passage 9, there are provided an oxidation catalyst 20 that oxidizes and purifies unburned components (HC, CO, $H_2$) contained in the exhaust gas, a storage reduction type NOx catalyst (NSR: NOx Storage Reduction) 22 that reduces and removes NOx contained in the exhaust gas, and a particulate filter (which will be called "DPF") 24 that collects particulate matters (PM), such as soot, in the exhaust gas. The oxidation catalyst 20, NOx catalyst 22 and the DPF 24 are arranged in series.

The NOx catalyst 22 has a substrate made of, for example, alumina ($Al_2O_3$), and a noble metal, such as platinum (Pt), and a NOx storage component, such as potassium (K), which are supported on a surface of the substrate. When an exhaust gas whose air-fuel ratio (A/F) is leaner than the stoichiometric ratio is supplied to the NOx catalyst 22, the NOx catalyst 22 stores NOx in the exhaust gas, in the form of nitrate. When an exhaust gas whose air-fuel ratio (A/F) is richer than the stoichiometric ratio is supplied to the NOx catalyst 22, the NOx catalyst 22 releases the stored NOx, so that the NOx reacts with an atmosphere, to be reduced.

In the case of the diesel engine of Fig. 1, the air-fuel ratio of in-cylinder gas during normal operation is significantly leaner than the stoichiometric ratio (e.g., A/F=14.6). Accordingly, exhaust gas whose air-fuel ratio (A/F) is leaner than the stoichiometric ratio is supplied to the NOx catalyst 22, and the NOx catalyst 22 adsorbs and stores NOx contained in the exhaust gas. Meanwhile, the stored NOx needs to be released from the NOx catalyst 22, so as to regenerate the NOx catalyst 22 on a regular basis. To this end, the air-fuel ratio of the in-cylinder gas is controlled to a value (e.g., A/F=14.0) that is richer than the stoichiometric ratio, and the resulting rich exhaust gas is supplied to the NOx catalyst 22.

The NOx catalyst 22 has a property of adsorbing sulfur derived from sulfur components in the fuel, as well as NOx. Since the sulfur adsorption is detrimental to the NOx storage capability, the air-fuel ratio is similarly controlled to be rich on a regular basis, so as to release the sulfur adsorbed and thus regenerate the NOx catalyst 22. The regeneration process for sulfur discharge is carried out at a higher temperature than the regeneration process for NOx reduction.

The engine 1 is provided with an electronic control unit (which will be called "ECU") 100 as control means. The ECU 100 includes CPU, ROM, RAM, input and output ports, storage device(s), and so forth. The ECU 100 controls the injectors 7, throttle valve 14, high-pressure pump 5, bypass valve 26, and other components, so as to perform desired engine control, based on detection values of various sensors, for example.

The sensors provided in the engine 1 include a crank angle sensor 15, an acceleration stroke sensor 16, an intake air pressure sensor 17, and an air-fuel ratio sensor 30, in addition to the above-mentioned air flow meter 12.

The crank angle sensor 15 generates a crank pulse signal to the ECU 100 during rotation of the crankshaft, and the ECU 100 detects the crank angle of the engine 1 based on the crank pulse signal, and calculates the speed of revolution of the engine 1. The acceleration stroke sensor 16 generates a signal indicative of the stroke (accelerator pedal position) of the accelerator pedal operated by the user, to the ECU 100.

The intake air pressure sensor 17 generates a signal indicative of the intake air pressure downstream of the throttle valve 14, i.e., the pressure in the intake passage 11 between the throttle valve 14 and each cylinder, to the ECU 100. In Fig. 1, the intake air pressure sensor 17 is installed in the intake manifold 2.

The air-fuel ratio sensor 30 is provided in the exhaust passage 9 at a location downstream of the NOx catalyst 22 and upstream of the DPF 24, and generates a signal indicative of the air-fuel ratio of exhaust gas to the ECU 100. The air-fuel ratio sensor 30 is a so-called wide range air-fuel ratio sensor, which is capable of continuously detecting the air-fuel ratio over a relatively wide range, and generates a signal whose value is proportional to the air-fuel ratio.

Next, air-fuel ratio switching control performed by the control device of Fig. 1 will be described.

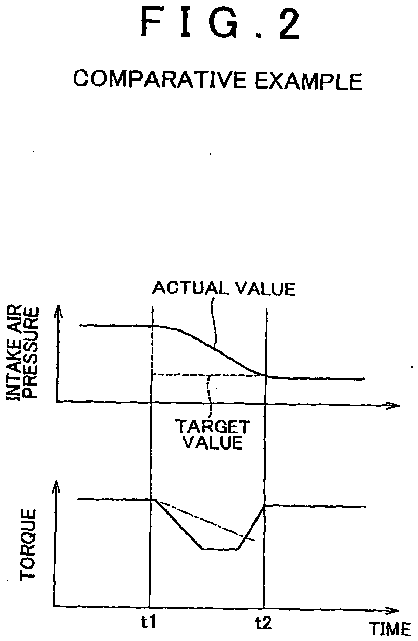

Initially, a comparative example that provides a base for air-fuel ratio switching will be described with reference to FIG. 2. In FIG. 2, the upper time chart indicates the intake air pressure, and the lower time chart indicates the engine torque (the output torque of the engine).

The engine is in normal operation prior to time t1. During the normal operation, the air-fuel ratio of the in-cylinder gas is significantly leaner than the stoichiometric ratio. However, no air-fuel ratio control is basically performed at this time. The fuel whose amount is determined by engine operating conditions, such as the engine speed and the accelerator pedal position, is injected into the cylinders, and the air-fuel ratio turns out to be lean. The air-fuel ratio during the normal operation will be called "first air-fuel ratio", and the control mode established during the normal operation will be called "normal control mode".

During the normal operation, the injector 7 of each cylinder performs main injection that would result in complete combustion (or substantially complete combustion) of injected fuel, at or around the compression top dead center or before the compression top dead center. The moment at which the main injection is executed will be called "main injection timing". In this connection, the injection timing means the moment at which fuel injection is started. The combustion resulting from the main injection will be called "main combustion". The main combustion is high-temperature, oxidation reaction.

The main injection is implemented in various injection patterns. For example, when a pilot injection for producing a source of flame is performed immediately before a substantial main injection at or around the compression top dead center, both injections are collectively called "main injection". Also, when the main injection is executed in two or more steps, the respective injection steps are collectively or generically called "main injection". Also, when a premixed injection is performed well before a substantial main injection so as to achieve premixed combustion, both injections are collectively called "main injection". Needless to say, when a single main injection is performed at or around the compression top dead center, the single main injection is called "main injection". Thus, the main injection includes fuel injection effected at or around the compression top dead center, and fuel injection effected before the compression top dead center.

After time t2, on the other hand, the air-fuel ratio of the in-cylinder gas is controlled to be richer than the stoichiometric ratio. The air-fuel ratio during the rich control will be called "second air-fuel ratio", and the control mode established during the rich control will be called "rich control mode". The rich control is performed so as to regenerate the NOx catalyst 22. The value of the second air-fuel ratio is, for example, 14.0.

During the rich control, the injector 7 of each cylinder performs, in addition to the main injection, "after injection" that would result in incomplete combustion of the injected fuel, at a moment later than the main injection timing.

In this specification, the "after injection" refers to one type of injection that will cause fuel injected from the injector 7 into the cylinder through this injection to be incompletely burned. The after injection is carried out immediately after completion of main combustion, while the interior of the cylinder is still in a high-temperature condition. In the comparative example, the injection timing of the after injection is, for example, at or after 40°CA after the compression top dead center (which will be denoted as 40°ATDC, for example) and at or before 90°ATDC, namely, is in the range of 40°ATDC and 90°ATDC. The combustion resulting from the after injection will be called "after combustion". The after combustion is not complete combustion, but combustion to the extent of low-temperature oxidation reaction, or half-combustion. Through the after combustion, which is incomplete combustion, a large amount of CO is produced. Also, the after combustion, which is incomplete but involves combustion of fuel, contributes to engine torque.

In the meantime, "post injection" is known as a technology that pertains to the same type of later injection as the above-described after injection. The post injection refers to injection that does not result in combustion of fuel injected from the injector 7 into the cylinder. Rather, the post injection is a fuel injection that is executed after a lapse of some interval (or a certain length of time) from the time of completion of main combustion. Thus, the post injection is a further delayed fuel injection, which is executed at the time when the in-cylinder temperature has been reduced to be lower than that of the after injection timing. The injection timing of the post injection is, for example, 100 - 180°ATDC. Through the post injection that does not result in combustion, a large amount of HC is produced. On the other hand, the post injection, which does not involve combustion, does not contribute to engine torque.

The after injection, rather than the post injection, is performed during rich control, because CO produced as a result of the after injection has a stronger reducing power than HC produced as a result of the post injection, thus assuring a high reduction efficiency, and consequently assuring a high regeneration efficiency of the NOx catalyst 22. Although the fuel may be added into the exhaust passage as a technology for making the exhaust gas fuel-rich, the addition of the fuel into the exhaust passage also results in production of HC, like the post injection, and is thus inferior to the after injection in terms of the reduction efficiency and the regeneration efficiency.

On the other hand, as shown in the upper chart of FIG. 2, intake air restriction is performed during a switching period from the start (t1) to the end (t2) of air-fuel ratio switching, so as to make it easier to create a fuel-rich condition by reducing the amount of intake air in the cylinder. The throttle valve 14 is operated in the closing direction at the same time as the start (t1) of switching, so that the intake air restriction is started. Then, the actual value of the intake air pressure is gradually reduced toward a given target value, and reaches the target value at time t2, as shown in the upper chart of FIG. 2. At time t2, switching of the air-fuel ratio is finished. Namely, the engine is in a final condition of air-fuel ratio switching upon and after time t2 at which the intake air restriction is completed, and is in a transient condition of air-fuel ratio switching during the switching period prior to the completion of the intake air restriction. The above-mentioned actual value of the intake air pressure represents a value of the intake air pressure detected by the intake air pressure sensor 17.

Even if the throttle valve 14 reaches a target opening promptly (at an earlier time than time t2), for intake air restriction, it takes time for the air charged into the intake air passage between the throttle valve 14 and each cylinder to be drawn into the combustion chamber and consumed; therefore, a certain length of time is required for the actual intake pressure to be reduced to the target value. Thus, there is a delay in the intake air restriction.

In the comparative example of FIG 2, the main injection and the after injection are carried out during the switching period (t1 - t2), in the same manner as those during the rich control after completion of the switching (after t2). In this case, however, the ignition of the fuel injected by the main injection (which will be called "main injection fuel") during the switching period is delayed for a prolonged time (or misfiring of the main injection fuel is likely to occur), and the main combustion may not be favorably accomplished. As a result, the engine torque is reduced as shown in the lower chart of FIG 2, which may result in torque shock. More specifically, the delay in the ignition of the main injection fuel is gradually prolonged as the intake air restriction proceeds, and the engine torque is gradually reduced. It is, however, to be noted that the manner or pattern of reduction of the engine torque varies depending on conditions, as indicated by the alternate long and short dashed line in FIG. 2.

Such phenomena as the increase of the delay in the ignition of the main injection fuel and the reduction of the engine torque are observed particularly in a low load region of the engine. This is because the amount of intake air in the cylinder during low-load engine operation is smaller than that during middle-load or high-load operation, and the compression end temperature is reduced.

If the main combustion cannot be favorably accomplished, the after combustion cannot also be favorably accomplished, because the after combustion makes use of heat generated by the main combustion. Accordingly, this also provides one factor of the reduction of the engine torque.

Also, even if the main combustion is favorably accomplished, the after combustion cannot be favorably effected unless the engine is in a condition where the intake air pressure is sufficiently reduced through sufficient intake air restriction, and the amount of intake air or gas in each cylinder is sufficiently reduced.

The above point will be explained in more detail. Initially, reference is made to the following equation (1), where ∆T denotes the amount of increase in the temperature of in-cylinder gas, and Q denotes the amount of heat supplied to the cylinder (which corresponds to the amount of fuel injected into the cylinder), while C is the heat capacity of the in-cylinder gas.

$$\Delta T = Q/C \qquad (1)$$

Even where the main injection amount Q is constant, the heat capacity C of the in-cylinder gas increases as the amount of the in-cylinder gas increases, and the increase ∆T in the temperature of the in-cylinder gas obtained by the main injection is reduced. Meanwhile, the after combustion makes use of heat generated by the main combustion. Therefore, unless the engine is in a condition where the amount of the in-cylinder gas is sufficiently reduced through sufficient intake air restriction, the temperature of the in-cylinder gas is not increased so much even if the main combustion is effected, and the after injection fuel (i.e., the fuel injected by the after injection) cannot be favorably ignited. This is because the amount of the in-cylinder gas is required to be reduced so as to achieve the after combustion.

In sum, the following statements can be made. First, it is difficult to favorably accomplish the main combustion during intake air restriction, particularly in a low-load operating region of the engine. Secondly, it is difficult to favorably effect the after combustion unless the engine is in a condition where intake air restriction has been sufficiently performed.

Therefore, it has been proposed to perform only the main injection, without performing the after injection, during the switching period (t1 - t2) of FIG 2, when the engine is in a middle- to high-load region other than the low-load region, and increase the amount of fuel injected by the main injection so as to compensate for an amount of reduction in the torque. In the low-load region, however, the same technique cannot be adopted since it becomes more difficult to achieve the main combustion and the after combustion in the low-load region. Thus, another technique or method that is fundamentally different from the above technique is needed.

The inventor of the present invention found, in the course of the study, that, if the after combustion can be accomplished for some reason, the main combustion can also be accomplished at the same time. The reason mentioned herein may be selected from conditions that the intake air temperature is high, or the boost pressure is high and the compression end temperature is high, for example. In any event, the after combustion brings the engine into a combustion condition in which the main combustion can be achieved. In the lower chart of FIG. 2, the engine torque increases in a period immediately before the end of the switching period (t2), which indicates that the after combustion makes it possible to realize the main combustion in this period.

The inventor has reached the present invention, on the basis of the above finding. The summary of the invention is that an after injection is performed at an earlier time than the after injection of the comparative example, during the switching period.

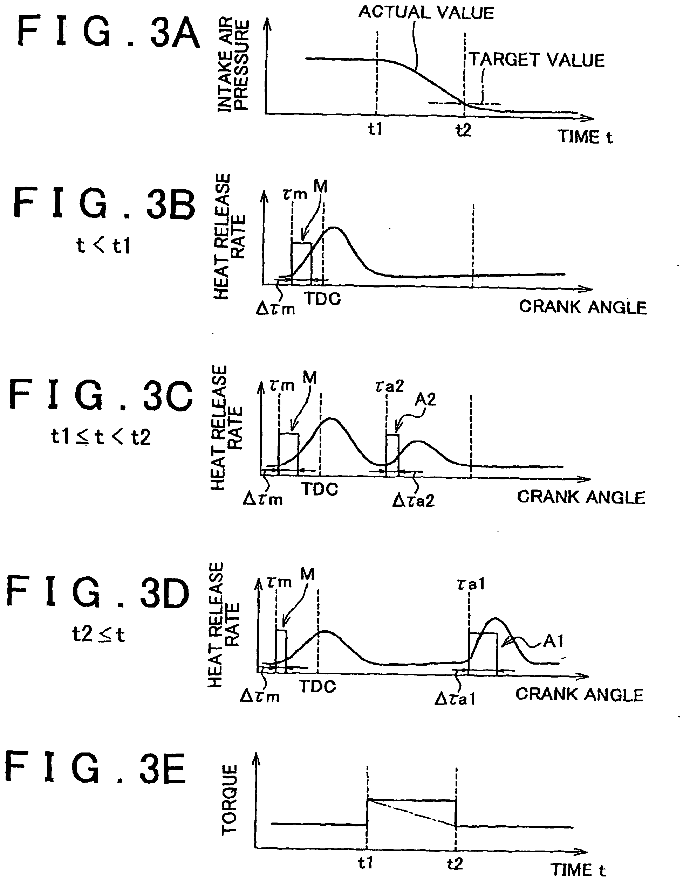

Departing from the invention as claimed, a first example of air-fuel ratio switching control of the control device of Fig. 1 is illustrated in FIG. 3A to FIG 3E. FIG 3A shows changes in the intake air pressure with respect to time t, like the upper chart of FIG. 2. FIG. 3B - FIG. 3D show changes in the rate of heat release with respect to the crank angle, the fuel injection timing, and the fuel injection amount. The fuel injection timing is represented by the energization start time $\tau$ of the injector 7, and the fuel injection amount is represented by the energization period of time $\Delta\tau$ of the injector 7. FIG. 3B shows the case where the current time (t) is prior to the switching start time t1 (t<t1), and FIG. 3C shows the case where the current time (t) is within the switching period (t1≤t<2), while FIG. 3D shows the case where the current time (t) is upon or after the switching completion time t2 (t2≤t). FIG. 3E shows changes in the engine torque with respect to time t, like the lower chart of FIG. 2. TDC means the compression top dead center.

As shown in FIG. 3B, prior to the switching start time t1, the engine is in normal operation in which the air-fuel ratio of in-cylinder gas is significantly leaner than the stoichiometric ratio, as in the above-described comparative example. During this period, only the main injection M is performed around the compression top dead center, more specifically, immediately before the compression top dead center. In FIG. 3B, $\tau$m denotes the main injection timing, and $\Delta\tau$m denotes the fuel injection amount of the main injection, or the main injection amount.

As shown in FIG. 3D, upon and after the switching completion time t2, the air-fuel ratio of the in-cylinder gas is controlled to be richer than the stoichiometric ratio, and the main injection M and the after injection are performed, as in the comparative example. The after injection performed in this final condition is called "first after injection", which is denoted by "A1" in FIG. 3D. The fuel injection timing of the first after injection is called "first after injection timing", which is denoted by "$\tau$a1" in FIG. 3D, and the fuel injection amount of the first after injection is called "first after injection amount", which is denoted by "$\Delta\tau$a1" in FIG. 3D.

As shown in FIG 3A, the intake air restriction is performed during the switching period (t1 - t2), as in the comparative example. More specifically, the intake air restriction is started at the same time as the start (t1) of switching, and the switching is finished (t2) at the same time that the intake air restriction is finished. The switching operation is started at the time (t1) when a regeneration request for regenerating the NOx catalyst 22 is received, and the start time (t1) is determined by the ECU 100 via another routine. The intake air restriction is finished or completed at the time (t2) when the actual value of the intake air pressure reaches the target value. During the intake air restriction, the throttle valve 14 is controlled in a feedback manner according to a difference between the actual value of the intake air pressure and the target value.

As shown in FIG. 3C, during the switching period (t1 - t2), the main injection M is performed, and a second after injection A2 is performed at an earlier time than the above-mentioned first after injection A1, unlike the comparative example. The fuel injection timing of the second after injection is called "second after injection timing", which is denoted by "$\tau$a2" in FIG 3C, and the fuel injection amount of the second after injection is called "second after injection amount", which is denoted by "$\Delta\tau$a2" in FIG. 3C.

The second after injection A2 is also one type of the "after injection". Namely, the second after injection is a fuel injection which would result in incomplete combustion of the fuel injected from the injector 7 into each cylinder, and which is performed while the interior of the cylinder is still in a high-temperature condition, immediately after the end of the main combustion. The combustion resulting from the second after injection A2 will be called "second after combustion". The second after combustion is not complete combustion, but combustion to an extent of low-temperature oxidation reaction, or half-combustion. Since the second after combustion is incomplete combustion, a large amount of CO is produced. Also, the second after combustion, which is incomplete but involves combustion, contributes to the engine torque.

The first after injection timing $\tau$a1 is, for example, upon or after 40°ATDC and before 90°ATDC, whereas the second after injection timing $\tau$a2 is, for example, upon or after 20°ATDC and before 40°ATDC, and is thus earlier than the first after injection timing $\tau$a1. As a matter of course, the second after injection timing $\tau$a2 is later than the main injection timing $\tau$m.

Immediately after the start (t1) of switching, the compression end temperature is still high. Also, the interval between the main injection M and the second after injection A2 is shorter than the interval between the main injection M and the first after injection A1. Therefore, if the second after injection A2 is performed at the same time as the start (t1) of switching, during the switching period, the second after injection A2 is effected in a condition where the compression end temperature is still high; therefore, the fuel injected by the second after injection A2 is favorably ignited, and good second after combustion can be achieved.

With the second after injection A2 thus performed, the exhaust temperature, the temperature of the internal EGR gas (exhaust gas that remains in each cylinder), and the temperature of the inner wall of each cylinder can be raised to higher levels, as compared with the case where the first after injection A1 is performed. As a result, the in-cylinder temperature can be increased so as to make up for reduction of the compression end temperature due to the intake air restriction, and favorable main combustion can be realized while the delay in the ignition of the main injection fuel is less likely or unlikely to be prolonged. If such favorable main combustion can be realized, the resulting heat may be utilized to achieve favorable second after combustion. Namely, the early-time second after injection A2 that enables the injected fuel to be ignited is carried out, from the initial period following the start of switching in which the intake air is not sufficiently restricted, so that the in-cylinder temperature is less likely or unlikely to be reduced during the intake air restriction, but is made more likely to be maintained or increased, whereby the main combustion, and consequently the second after combustion, can be favorably maintained or realized.

Thus, it is possible to achieve favorable main combustion during the air-fuel ratio switching period, thereby to prevent, in advance, torque shock that would be caused by reduction of the engine torque.

In particular, it is preferable to perform the air-fuel ratio switching control of the control device of Fig. 1 when the engine is operating at a low load, i.e., when the engine load is equal to or lower than a predetermined value, because it is particularly difficult, in the low-load region, to achieve favorable main combustion, and torque shock is likely to occur in this region. Here, the predetermined value is preferably 20% of the maximum load, more preferably, 10% of the maximum load. It is, however, to be noted that the air-fuel ratio switching control of the control device of Fig. 1 can be suitably executed in a load region other than the low-load region.

The first example as shown in FIG. 3A through FIG. 3E will be described in more detail. As shown in FIG. 3B, before the start of switching, the single main injection M is performed at time $\tau$m immediately before the compression top dead center, and the injection amount is $\Delta\tau$m.

Then, once switching is started, the main injection M and the second after injection A2 are performed, as shown in FIG. 3C. At this time, the main injection timing $\tau$m is advanced so as to avoid misfiring of the main injection fuel, for example, but the main injection amount $\Delta\tau$m is kept at the same amount. During the switching period, the second after injection A2 is performed at the constant injection timing $\tau$a2 with the constant injection amount $\Delta\tau$a2.

The air-fuel ratio during the switching period is preferably an intermediate value that is richer than the first air-fuel ratio established prior to the start of switching and is leaner than the second air-fuel ratio to be established after the completion of switching, and is preferably equal to a value that is slightly leaner than the stoichiometric ratio. For example, the air-fuel ratio (A/F) is preferably controlled to be equal to about 17.0. However, the value may be determined as desired.

After the completion of switching, the main injection M and the first injection A1 are performed, as shown in FIG. 3D. The main injection timing $\tau$m is kept at the same timing as that during the switching period, but the main injection amount $\Delta\tau$m is reduced to be smaller than the amount prior to the start of switching and the amount during the switching period, so as to cancel an increase in the engine torque due to switching from the second after combustion to the first after combustion. On the other hand, the first after injection amount $\Delta\tau$a1 is made larger than the second after injection amount $\Delta\tau$a2 during the switching period. Namely, the second after injection amount $\Delta\tau$a2 is smaller than the first after injection amount $\Delta\tau$a1.

As shown in FIG. 3E, the engine torque during the switching period is somewhat larger than those prior to the start of switching and after the end of switching. While the engine torque is often constant as indicated by the solid line in FIG. 3E, the torque may be initially increased rapidly, and then gradually reduced, as indicated by the alternate long and short dashed line in FIG. 3E. The engine torque is gradually reduced because the compression end temperature gradually decreases as the intake air restriction proceeds, and the delay in the ignition tends to be gradually prolonged, as described above.

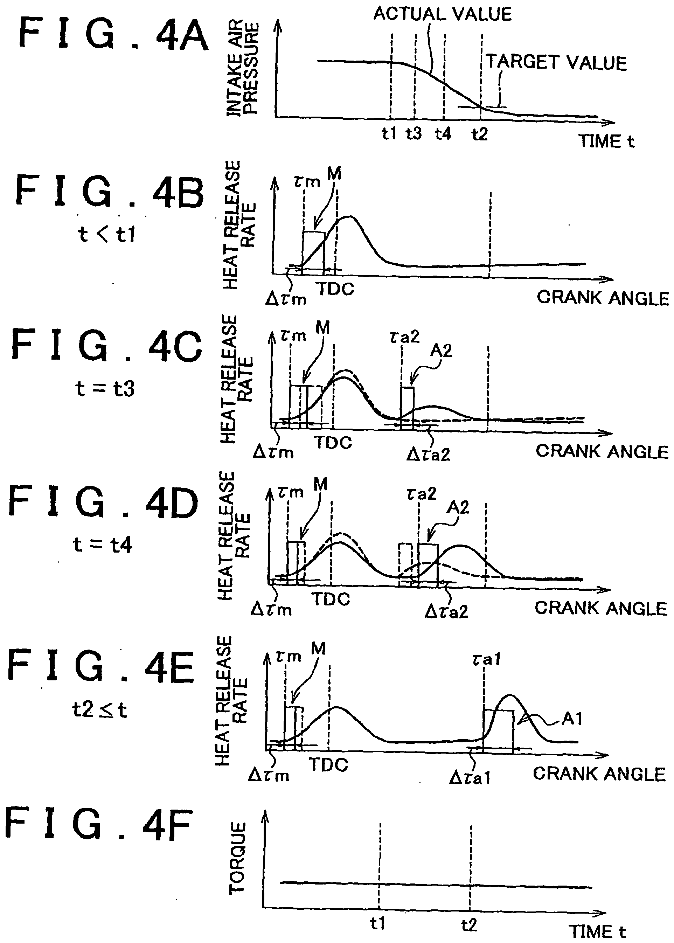

Next, a second example, in accordance with the invention, of air-fuel ratio switching control of the control device of Fig. 1 will be described with reference to FIG. 4A through FIG. 4F. FIG. 4A, FIG. 4B and FIG. 4E are substantially identical with FIG. 3A, FIG 3B and FIG. 3D. FIG. 4C and FIG. 4D show how the main injection M and the second after injection A2 are performed during the switching period (t1 - t2). In this example, during the switching period, the second after injection timing $\tau$a2 is gradually delayed to be closer to the first after injection timing $\tau$a1, and the second after injection amount $\Delta\tau$a2 is gradually increased to be closer to the first after injection amount $\Delta\tau$a1. FIG. 4C and FIG. 4D indicate fuel injection conditions at time t3 and time t4, respectively, during the switching period as shown in FIG. 4A.

Also, in this example, the main injection amount $\Delta\tau$m is gradually reduced to be closer to the amount (indicated in FIG. 4E) after the end of switching.

Once the switching operation is started, the main injection M, and the second after injection A2 of which the fuel injection amount is smaller than the first after injection amount $\Delta\tau$a1, are carried out, as shown in FIG. 4C. The main injection timing $\tau$m is advanced from that prior to the start of switching, to be equal to the timing after the end of switching, and the main injection amount $\Delta\tau$m is reduced to be smaller than that after injection, the in-cylinder temperature at the after injection timing is reduced, which prior to the start of switching. The conditions prior to the start of switching as shown in FIG 4B are indicated by broken lines in FIG 4C. The main injection amount $\Delta\tau$m is reduced in order to suppress or prevent the increase of the engine torque as indicated in FIG. 3E.

Then, the second after injection A2 is performed as shown in FIG. 4D, such that the second after injection timing $\tau$a2 is delayed, and the second after injection amount $\Delta\tau$a2 is increased, as compared with the conditions indicated in FIG. 4C. With regard to the main injection M, the main injection timing $\tau$m is maintained, but the main injection amount $\Delta\tau$m is reduced, as compared with the conditions indicated in FIG. 4C. The conditions of FIG. 4C are indicated by broken lines in FIG 4D.

Thus, over the period from the start of switching to the end of switching, the second after injection timing $\tau$a2 is gradually delayed toward the first after injection timing $\tau$a1, and the second after injection amount $\Delta\tau$a2 is gradually increased toward the first after injection amount $\Delta\tau$a1. Also, the main injection amount $\Delta\tau$m is gradually reduced toward the amount after the end of switching.

In the first example, the injection timing and injection amount of the main injection and after injection are instantly changed in each stage of pre-switching, switching, and post-switching; therefore, the engine torque is likely to change abruptly or increase. In this example, however, the injection timing and the injection amount are gradually changed; therefore, abrupt changes or increases in the engine torque are less likely or unlikely to occur, and smooth transition and continuity can be achieved with regard to the engine torque. Thus, as shown in FIG 4F, the engine torque during the switching period can be made equal to those prior to the start of switching and after the end of switching.

Regarding the relationship between the main injection and the after injection, as the interval between the main injection and the after injection is reduced by advancing the after injection, the in-cylinder temperature at the after injection timing is increased, which makes it easy to achieve the after combustion. On the contrary, as the interval between the main injection and the after injection is increased by delaying the makes it difficult to achieve the after combustion. The in-cylinder temperature at the after injection timing is increased as the interval between the main injection and the after injection is reduced, because the proportion of the heat generated by the main injection, which is used for expansion, is small, and therefore, the reduction of the in-cylinder temperature can be avoided or suppressed.

According to the second example, the second after injection is advanced most in the initial period of switching; therefore, the interval between the main injection and the second after injection is minimized, and the second after combustion can be effected under the most advantageous temperature condition. Accordingly, the second after combustion can be almost certainly accomplished. If the second after combustion can be realized in the initial period, the in-cylinder temperature can be maintained in the subsequent period, and the main and second after injections can be performed with reliability. Thus, the second example is advantageous in ensuring the combustion during the switching period.

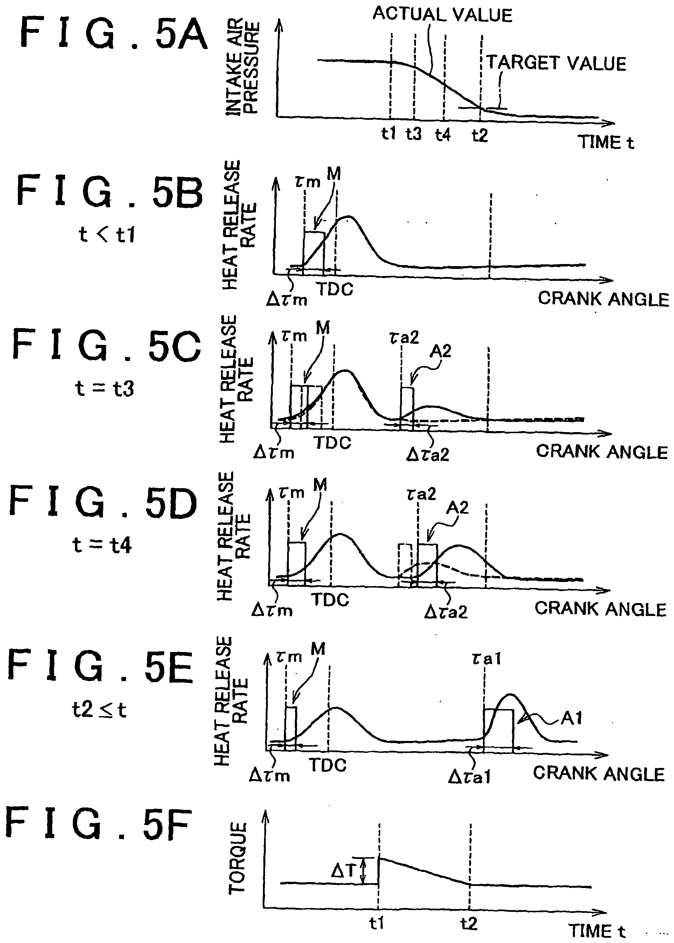

Next, departing from the invention as claimed, a third example of air-fuel ratio switching control of the control device of Fig. 1 will be described with reference to FIG 5A through FIG. 5F. FIG. 5A, FIG. 5B and FIG. 5E are substantially identical with FIG. 3A, FIG. 3B and FIG. 3D. FIG. 5C and FIG. 5D show how the main injection M and the second after injection A2 are performed during the switching period (t1 - t2). In this example, the second after injection timing $\tau$a2 is gradually delayed to be closer to the first after injection timing $\tau$a1, and the second after injection amount $\Delta\tau$a2 is gradually increased to be closer to the first after injection amount $\Delta\tau$a1, during the switching period. FIG. 5C and FIG. 5D indicate fuel injection conditions at time t3 and time t4, respectively, during the switching period indicated in FIG. 5A.

Also, in this example, the main injection amount $\Delta\tau$m is not reduced during the switching period. The third example is different in this point from the second example.

Once the switching operation is started, the main injection M and the likely to achieve favorable second after combustion. second after injection A2 of which the fuel injection amount is smaller than the first after injection amount $\Delta\tau$a1 are carried out, as shown in FIG. 5C. The main injection timing $\tau$m is advanced from that prior to the start of switching, so as to be equal to the timing after the end of switching. On the other hand, the main injection amount $\Delta\tau$m is kept at the same amount or substantially the same amount as that prior to the start of switching. In FIG. 5C, the conditions prior to the start of switching are indicated by broken lines.

Then, the second after injection A2 is performed as shown in FIG. 5D, such that the second after injection timing $\tau$a2 is delayed and the second after injection amount $\Delta\tau$a2 is increased, as compared with the conditions shown in FIG 5C. With regard to the main injection M, the main injection timing $\tau$m and the main injection amount $\Delta\tau$m are both maintained or kept being the same as those of the conditions shown in FIG. 5C. In FIG. 5D, the conditions of FIG. 5C are indicated by broken lines.

Once the switching operation is completed, the main injection M and the first after injection A1 are carried out, as shown in FIG 5E. Upon and after the end of switching, the main injection amount $\Delta\tau$m is reduced to be smaller than the main injection amount before the start of switching and during the switching period. Meanwhile, the main injection timing $\tau$m is the same as the main injection timing during the switching period.

The main injection amount $\Delta\tau$m is not reduced during the switching period, but is kept at the same or substantially the same amount as that prior to the start of switching, for the following reason; if the main injection amount $\Delta\tau$m is reduced as in the second example, the second after injection fuel may misfire, and the second after combustion may not be favorably accomplished. This has some connection with the arrangements that the second after injection timing $\tau$a2 is gradually delayed, and the second after injection amount $\Delta\tau$a2 is gradually increased. The interval between the main injection M and the second after injection A2 is increased as the second after injection timing $\tau$a2 is delayed, and the second after injection fuel has a possibility of misfiring due to latent heat of vaporization as the second after injection amount $\Delta\tau$a2 is increased. The increased interval and the possibility of misfiring make it difficult or less

According to the third example, the main injection amount $\Delta\tau$m is not reduced during the switching period; therefore, the main combustion is stabilized, and favorable second after combustion can be realized. In the case where the main injection amount $\Delta\tau$m is reduced as in the second example, it is desirable to control the amount of reduction so that the main injection fuel can be fired with sufficiently high reliability.

Since the main injection amount $\Delta\tau$m is not reduced during the switching period in this example, the engine torque increases in the initial period following the start of switching, as shown in FIG. 5F. In this example, however, the increase in the torque is permitted. There is no particular problem provided that the amount of increase of the torque $\Delta$T is within a permissible range, for example, is such a degree that the driver does not sense the torque increase in the vehicle. Subsequently to the torque increase, the engine torque tends to gradually decrease toward the final condition after switching.

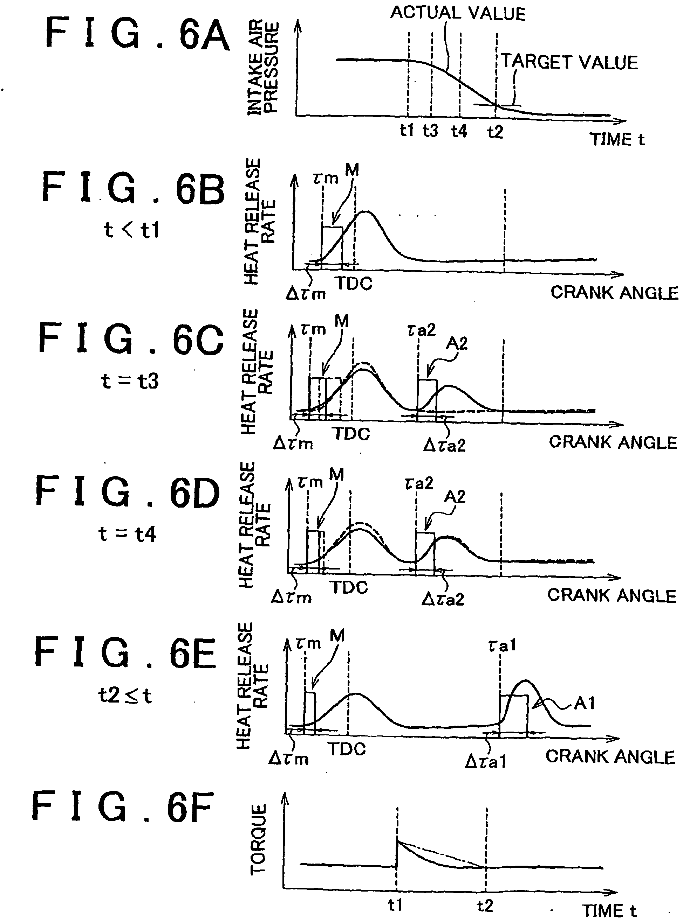

Next, a fourth example, in accordance with the invention, of air-fuel ratio switching control of the control device of Fig. 1 will be described with reference to FIG. 6A through FIG. 6F. FIG. 6A, FIG. 6B and FIG. 6E are substantially identical with FIG. 3A, FIG. 3B and FIG. 3D, respectively. FIG. 6C and FIG. 6D show how the main injection M and the second after injection A2 are performed during the switching period (t1 - t2). In this example, the second after injection timing $\tau$a2 and the second after injection amount $\Delta\tau$a2 are kept constant during the switching period. FIG. 6C and FIG. 6D show fuel injection conditions at time t3 and time t4, respectively, during the switching period shown in FIG. 6A.

Also, in this example, the main injection amount $\Delta\tau$m is gradually reduced during the switching period, to be closer to the amount (indicated in FIG. 6E) after the end of switching, as in the second example (FIG. 4B to FIG. 4E).

Once the switching operation is started, the main injection M, and the second after injection A2 of which the fuel injection amount is smaller than the first after injection amount $\Delta\tau$a1 are carried out, as shown in FIG. 6C. The main injection amount $\tau$m is advanced from that prior to the start of switching, so as to equal to the timing after the end of switching, and the main injection amount $\Delta\tau$m is reduced to be smaller than that prior to the start of switching. The conditions of FIG. 6B prior to the start of switching are indicated by broken lines in FIG. 6C.

Then, with regard to the main injection M, the main injection timing $\tau$m is maintained or kept at the same timing, but the main injection amount $\Delta\tau$m is reduced, with respect to the conditions shown in FIG. 6C, as shown in FIG. 6D. The conditions of FIG. 6C are indicated by broken lines in FIG. 6D. With regard to the second after injection A2, the injection timing τa2 and the injection amount Δτa2 are both equal to those of the conditions shown in FIG. 6C.

Thus, over the period from the start to the end of switching, the main injection amount Δτm is gradually reduced toward the amount after the end of switching, and the second after injection timing τa2 and the second after injection amount Δτa2 are kept constant.

According to this example, the second after injection timing τa2 is not delayed during the switching period, so that the stability of the second after combustion is improved, and consequently the stability of the main combustion is improved.

In FIG. 6F, the solid line indicates torque changes of this example (fourth example), and the alternate long and short dashed line indicates torque changes of the third example. As is understood from FIG. 6F, the fourth example provides better torque convergence after the engine torque is once increased during the switching period, than the third example. While the second after injection A2 is fixed and the main injection M is varied in the fourth example, the torque sensitivity is higher when the main injection M is varied, than that obtained when the second after injection A2 is varied. Thus, the torque convergence is improved.

Next, a method for gradually delaying the second after injection timing τa2, a method for gradually increasing the second after injection amount Δτa2, and a method for gradually reducing the main injection amount Δτm, as described above with regard to the second example (FIG. 4B to FIG. 4E), will be described.

As a first method, the speed of delaying the injection timing or the amount of delay at each computation time during the switching period, the speed of increase of the injection amount or the amount of increase at each computation time during the switching period, and the speed of reduction of the injection amount or the amount of reduction at each computation time during the switching period are all determined by adaptive values (values determined by way of experiment in advance). When the air-fuel ratio switching is performed only in the low-load operating region of the engine, the number of steps required for adaptation may be small.

As a second method, respective values during the switching period are obtained by calculation. One example of this method will be explained in which delaying of the second after injection timing τa2 is taken as an example.

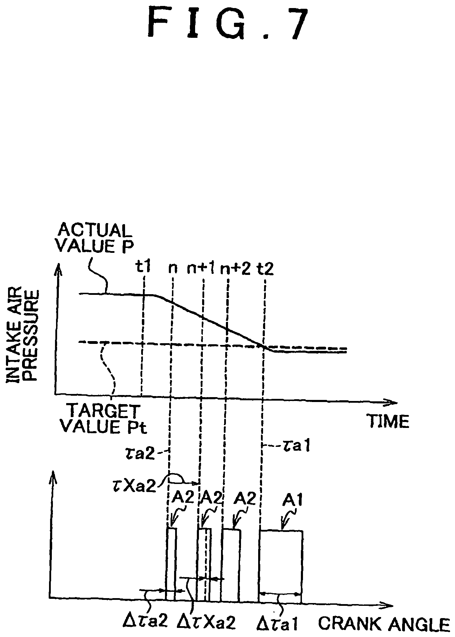

Referring to FIG. 7, the upper chart indicates changes in the intake air pressure with respect to time, and the lower chart indicates the injection timing and injection amounts of the second after injection A2 and the first after injection A1. The crank angle becomes larger in the delaying direction.

The ECU 100 calculates the second after injection timing τa2 according to the following equation (2), at each computation time. Here, the ECU 100 determines the injection amount and the injection timing for each cycle (=720°CA) of the engine, and uniformly applies the determined injection amount and injection timing to all of the cylinders. Thus, the computation times mentioned herein mean a sequence of times or moments separated at intervals each corresponding to one cycle of the engine. It is, however, to be noted that the computation times may be determined or defined as desired.

$$\tau a2_{n+1} = \tau a2_n + \tau Xa2_n \qquad (2)$$

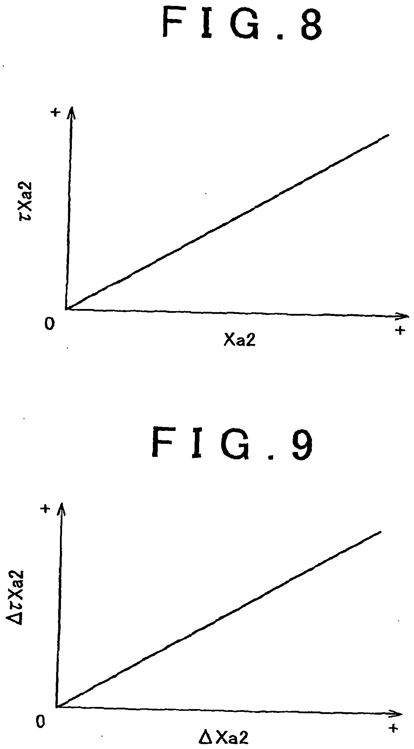

In the above equation (2), n indicates that the value in question is obtained at the current computation time, and n+1 indicates that the value in question is obtained at the next computation time. τXa2, which represents the delay amount or correction amount, is calculated by the ECU 100, from a given map (which may be a function) as indicated in FIG. 8. A delay amount parameter Xa2 is a value that provides a basis for calculation of the delay amount, and is calculated by the ECU 100 according to the following equation (3).

$$Xa2_n = \frac{P_n - Pt}{Pt} \times (\tau a1 - \tau a2_n) \qquad (3)$$

In the above equation (3), P is the actual value of the intake air pressure, and Pt is a target value of the intake air pressure. As is understood from the above equation (3), the delay amount parameter Xa2 increases as a difference (P-Pt) between the actual value and target value of the intake air pressure is larger, and as a difference (τa1-τa2) between the second after injection timing and the first after injection timing (which is constant) is larger. As is also understood from FIG. 8, as the delay amount parameter Xa2 increases, the delay amount τXa2 increases, and the second after injection timing τa2 is more largely delayed.

Thus, the second after injection timing τa2 is largely delayed at each computation time, in the initial stage of the switching period (t1 - t2) or intake air restriction, and the delay amount at each computation time is gradually reduced as the intake air restriction proceeds. Accordingly, the speed of delaying the injection timing is high at first, but gradually slows down, as indicated in the lower chart of FIG 7.

Next, the manner of increasing the second after injection amount Δτa2 will be described. The ECU 100 calculates the second after injection amount $\Delta\tau a2$ according to the following equation (4), at each computation time.

$$\Delta\tau a2_{n+1}=\Delta\tau a2_n+\Delta\tau Xa2_n \qquad (4)$$

$\Delta\tau Xa2$, which represents the amount of increase or correction amount, is calculated by the ECU 100, from a given map (which may be a function) as indicated in FIG. 9. An increase amount parameter $\Delta Xa2$ is a value that provides a basis for calculation of the increase amount, and is calculated by the ECU 100 according to the following equation (5).

$$\Delta Xa2_n = \frac{P_n - Pt}{Pt} \times (\Delta\tau a1 - \Delta\tau a2_n) \qquad (5)$$

As is understood from the above equation (5), the increase amount parameter $\Delta Xa2$ increases as a difference (P-Pt) between the actual value and target value of the intake air pressure is larger, and as a difference ($\Delta\tau a1-\Delta\tau a2$) between the second after injection amount and the first after injection amount is larger. As is also understood from FIG. 9, as the increase amount parameter $\Delta Xa2$ increases, the increase amount $\Delta\tau Xa2$ increases, and the second after injection amount $\Delta\tau a2$ is more largely increased.

Thus, the second after injection amount $\Delta\tau a2$ is largely increased at each computation time, in the initial stage of the switching period (t1 - t2) or intake air restriction, and the amount of increase at each computation time is gradually reduced as the intake air restriction proceeds. Accordingly, the rate of increase of the injection amount is high at first, but is gradually reduced, as indicated in the lower chart of FIG. 7.

Next, the manner of reducing the main injection amount $\Delta\tau m$ will be described. The ECU 100 calculates the main injection amount $\Delta\tau m$ according to the following equation (6), at each computation time.

$$\Delta\tau m_{n+1}=\Delta\tau m_n+\Delta\tau Xm_n \qquad (6)$$

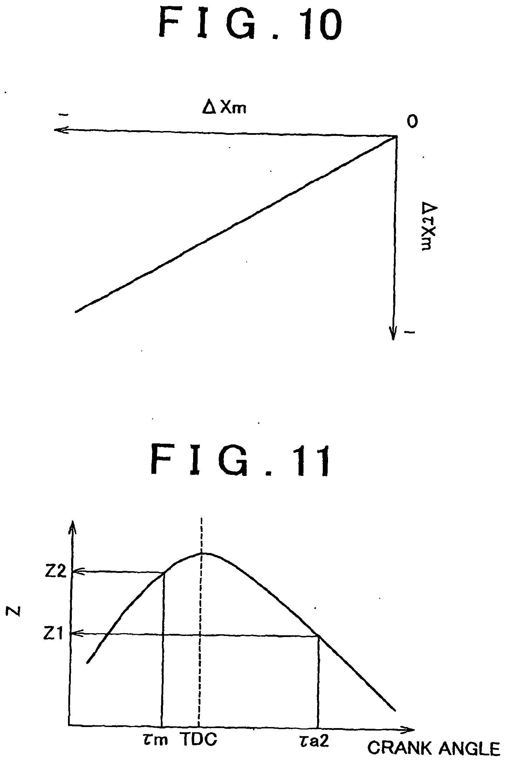

$\Delta\tau Xm$, which represents the amount of reduction or correction amount, is calculated by the ECU 100, from a given map as indicated in FIG. 10. A reduction amount parameter $\Delta Xm$ is a value that provides a basis for calculation of the reduction amount, and is calculated by the ECU 100 according to the following equation (7).

$$\Delta Xm_n = \frac{P_n - Pt}{Pt} \times (\Delta\tau m1 - \Delta\tau m_n) \qquad (7)$$

In the above equation (7), $\Delta\tau m1$ is the main injection amount after the end of switching or in the final condition. A difference ($\Delta\tau m1-\Delta\tau m$) between the main injection amount after the end of switching and the main injection amount during the switching period is a negative value, and therefore, the reduction amount parameter $\Delta Xm$ and the reduction amount $\Delta\tau Xm$ are also negative values (see FIG. 10). As is understood from the above equation (7), the reduction amount parameter $\Delta Xm$ becomes larger in the negative direction as a difference (P-Pt) between the actual value and.target value of the intake air pressure is larger, and as an absolute value of a difference ($\Delta\tau m1-\Delta\tau m$) between the main injection amount after the end of switching and the main injection amount during the switching period is larger. As is also understood from FIG. 10, as the reduction amount parameter $\Delta Xm$ is larger in the negative direction, the reduction amount $\Delta\tau Xm$ becomes larger in the negative direction, and the main injection amount $\Delta\tau m$ is more largely reduced.

Thus, the main injection amount $\Delta\tau m$ is largely reduced at each computation time, in the initial stage of the switching period (t1 - t2) or intake air restriction, and the amount of reduction at each computation time is gradually reduced as the intake air restriction proceeds. Accordingly, the rate of reduction of the main injection amount is high at first, but is gradually reduced.

Thus, according to the second method, each value during the switching period is calculated based on the difference between the actual value and target value of the intake air pressure during the switching period, and the difference between each value during the switching period and each value after the end of switching. Alternatively, each value during the switching period may be calculated based on only one of the above-indicated differences.

Next, a third method will be explained. As one example, the manner of reducing the main injection amount $\Delta\tau m$ during the switching period will be described.

In this example, only the main injection amount $\Delta\tau m$ is unknown, and other values, i.e., the second after injection timing $\tau a2$, the second after injection amount $\Delta\tau a2$ and the main injection timing $\tau m$, are known.

For example, the second after injection timing $\tau$a2 is delayed from a given initial value by a given crank angle (e.g., 1°CA) at each computation time, and the value of the second after injection timing $\tau$a2 at each computation time is grasped. Similarly, the second after injection amount $\Delta\tau$a2 is increased from a given initial value by a given amount (e.g., 0.1mm$^3$/st) at each computation time, and the value of the second after injection amount $\Delta\tau$a2 at each computation time is grasped. Alternatively, the values of the second after injection timing $\tau$a2 and the second after injection amount $\Delta\tau$a2 may be determined by the second method.

The main injection timing $\tau$m, which is equal to the timing after the end of switching, is kept constant.

In this example, a map stored in advance in the ECU 100, as shown in FIG. 11, is used. This map specifies the engine torque (Nm/(mm$^3$/st)) Z per mm$^3$/st of fuel injection amount, which corresponds to each crank angle. This map will be hereinafter called "torque conversion map", and the engine torque Z obtained from the torque conversion map will be called "unit torque".

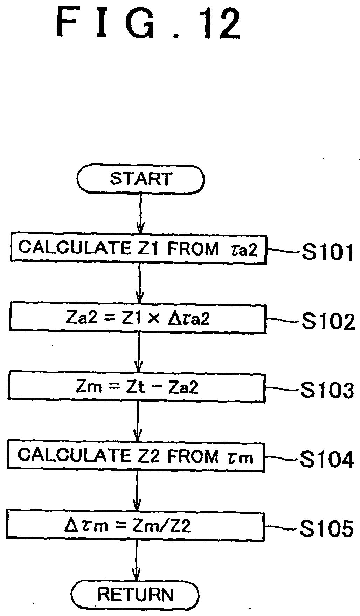

FIG. 12 illustrates a routine for calculating the main injection amount $\Delta\tau$m. This routine is repeatedly executed by the ECU 100 at each computation time.

Initially in step S101, the unit torque Z1 corresponding to the second after injection timing $\tau$a2 is calculated from the torque conversion map.

Then, in step S142, the engine torque Za2 produced by the second after injection is calculated from "Za2=Z1$\times\Delta\tau$a2".

Then, in step S103, the engine torque Zm to be produced by the main injection is calculated from "Zm=Zt-Za2". In this equation, Zt represents target torque, and its value may be made equal to the value of torque generated from the engine immediately before switching.

Then, in step S104, the unit torque Z2 corresponding to the main injection timing $\tau$m is calculated from the torque conversion map.

Finally, in step S105, the main injection amount $\Delta\tau$m is calculated from "$\Delta\tau$m=Zm/Z2".

According to this routine, the engine torque during the switching period can be kept constant, to be equal to the engine torque immediately before switching, and torque shock at the time of switching can be prevented.

Next, as another example of the third method, the manner of increasing the second after injection amount $\Delta\tau$a2 during the switching period will be described.

In this example, only the second after injection amount $\Delta\tau$a2 is unknown, and other values, namely, the second after injection timing $\tau$a2, the main injection timing $\tau$m and the main injection amount $\Delta\tau$m, are known.

As in the above-described example, the second after injection timing $\tau$a2 is delayed from a given initial value by a given crank angle (e.g., 1°CA) at each computation time, and the value of the second after injection timing $\tau$a2 at each computation time is grasped. Alternatively, the value of the second after injection timing $\tau$a2 may be determined by the second method.

The main injection timing $\tau$m, which is the same as the timing after the end of switching, is kept constant. The main injection amount $\Delta\tau$m is reduced from a given initial value by a given amount (e.g., 0.1mm$^3$/st) at each computation time, and the value of the main injection amount $\Delta\tau$m at each computation time is grasped. Here, the initial value of the main injection amount $\Delta\tau$m may be made equal to the value before the start of switching.

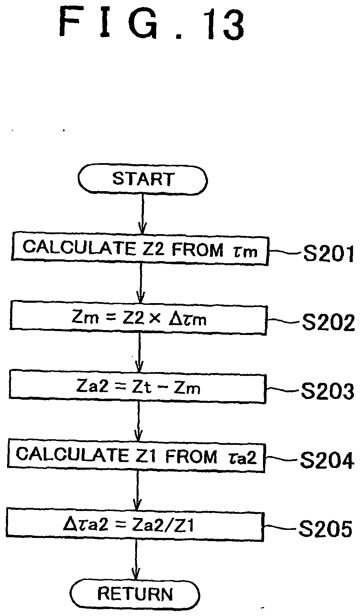

In this example, too, the torque conversion map as shown in FIG. 11 is used. FIG. 13 illustrates a routine for calculating the second after injection amount $\Delta\tau$a2, and the routine is repeatedly executed by the ECU 100 at each computation time.

Initially, in step S201, the unit torque Z2 corresponding to the main injection timing $\tau$m is calculated from the torque conversion map.

Then, in step S202, the engine torque Zm produced by the main injection is calculated from "Zm=Z2$\times\Delta\tau$m".

Then, in step S203, the engine torque Za2 to be produced by the second after injection is calculated from "Za2=Zt-Zm".

Then, in step S204, the unit torque Z1 corresponding to the second after injection timing $\tau$a2 is calculated from the torque conversion map.

Finally, in step S205, the second after injection amount $\Delta\tau$a2 is calculated from "$\Delta\tau$a2=Za2/Z1".

According to this routine, the engine torque during the switching period can be kept constant, to be equal to the engine torque immediately before switching, and otherwise possible torque shock at the time of switching can be prevented.

While the invention has been described, the invention may be embodied otherwise. For example, the amount of intake air may be restricted by reducing the rotational speed of the turbocharger, in addition to or instead of operating the throttle valve toward the closed position. In the engine provided with the bypass valve 26 as in the the control device of Fig. 1, the rotational speed of the turbocharger may be reduced by operating the bypass valve 26 in the direction to open the valve 26. Where the turbocharger includes variable vanes in the turbine, the rotational speed of the turbocharger may be reduced by operating the variable vanes in the opening direction.

The switching of the air-fuel ratio to the rich side may be conducted for other purposes than regeneration of the NOx catalyst. For example, the switching may be conducted for the purpose of regenerating a continuous regeneration type DPF provided with a catalyst.

It is possible to combine selected ones of operations to keep each injection timing at the same timing, and advance and delay each injection timing. Thus, the embodiment of this invention is not limited to the first to fourth examples as described above. During the switching period, the main injection timing may be gradually advanced from the value prior to the start of switching, to the value after the end of switching.

The invention may be applied to internal combustion engines other than the diesel engine, i.e., compression ignition type internal combustion engine. For example, the invention may be applied to a spark ignition type internal combustion engine, in particular, a direct-injection lean bum gasoline engine. Each of the above-indicated numerical values is merely one example, and may be changed as appropriate.

The invention has been described with reference to the second and frouth examples for illustrative purposes only. It should be understood that the description is not intended to be exhaustive or to limit form of the invention and that the invention may be adapted for use in other systems and applications.

## Claims

1. A control device (100) of an internal combustion engine, configured to switch an air-fuel ratio of in-cylinder gas from a first air-fuel ratio for normal operation, which is leaner than a stoichiometric ratio, to a second air-fuel ratio that is richer than the stoichiometric ratio, and is configured to carry out intake air restriction during a switching period from the start of the switching to the end thereof, wherein;

   the control device (100) is configured such that, prior to the start of the switching (t1), a main injection (M) that results in complete combustion of injected fuel is performed at a main injection timing that is at or around a compression top dead center or before the compression top dead center;

   the control device (100) is further configured such that, after the end of the switching (t2), the main injection (M) is performed at the main injection timing and a first after injection (A1) that results in incomplete combustion of injected fuel is performed at a first after injection timing (ta1) that is later than the main injection timing; and

   the control device (100) is further configured such that, during the switching period (tl-t2), the main injection (M) is performed at the main injection timing and a second after injection (A2) that results in incomplete combustion of injected fuel is performed at a second after injection timing (ta2) that is later than the main injection timing and is earlier than the first after injection timing (ta1);

   the control device (100) is further configured such that, a fuel injection amount of the main injection after the end of the switching is made smaller than a fuel injection amount of the main injection prior to the start of the switching;

   the control device (100) is further configured such that, during the switching period, the fuel injection amount of the main injection is reduced so as to gradually approach the amount after the end of the switching, and an amount of reduction in the fuel injection amount of the main injection is gradually reduced as the intake air restriction proceeds; and

   the control device (100) is further configured such that, during the switching period, the amount of reduction at each computation time is determined based on a difference between an actual value and a target value of an intake air pressure and a difference between the fuel injection amount of the main injection after the end of the switching and the fuel injection amount of the main injection during the switching period, and the amount of reduction at each computation time is made larger as at least one of the difference between the actual value and the target value of the intake air pressure is larger and the difference between the fuel injection amount of the main injection after the end of the switching and the fuel injection amount of the main injection during the switching period is larger.

2. The control device of the internal combustion engine according to claim 1, wherein, as the intake air restriction proceeds, during the switching period (t1-t2) the second after injection timing (ta2) is delayed so as to gradually approach the first after injection timing (ta1), and a speed of delaying the injection timing is gradually slowed down.

3. The control device of the internal combustion engine according to claim 2, wherein , during the switching period, an amount of delay at each computation time is determined based on the difference between the actual value and the target value of the intake air pressure and a difference between the second after injection timing and the first after injection timing, and the amount of delay at each computation time is made larger as at least one of the difference between the actual value and the target value of the intake air pressure is larger and the difference between the second after injection timing and the first after injection timing is larger.

4. The control device of the internal combustion engine according to claim 1 or claim 2, wherein a fuel injection amount

($\triangle$ta2) of the second after injection (A2) is smaller than a fuel injection amount ($\triangle$ta1) of the first after injection (A1).

5. The control device of the internal combustion engine according to any one of claims 1 to 4, wherein, as the intake air restriction proceeds during the switching period, a fuel injection amount ($\triangle$ta2) of the second after injection (A2) is gradually increased from a fuel injection amount that is smaller than a fuel injection amount of the first after injection so as to gradually approach the fuel injection amount ($\triangle$ta1) of the first after injection (A1), and an amount of increase in the fuel injection amount of the second after injection is gradually reduced.

6. The control device of the internal combustion engine according to claim 5, wherein , during the switching period, the amount of increase at each computation time is determined based on the difference between the actual value and the target value of the intake air pressure and the difference between the second after injection timing and the first after injection timing, and the amount of increase at each computation time is made larger as at least one of the difference between the actual value and the target value of the intake air pressure is larger and the difference between the second after injection timing and the first after injection timing is larger.

7. The control device of the internal combustion engine according to any one of claim 1 to claim 6, wherein at least one of the main injection timing during the switching period and the main injection timing after the end of the switching is made to be earlier than the main injection timing before the start of switching.

8. The control device of the internal combustion engine according to claim 7, wherein the main injection timing after the end of switching and the main injection timing during the switching period are set to the same injection timing, which is earlier than the main injection timing before the start of switching.

9. The control device of the internal combustion engine according to any one of claim 1 to claim 8, wherein during the switching period (t1-t2), the fuel injection amount of the main injection is kept substantially equal to the fuel injection amount of the main injection prior to the start of the switching (t1).

10. The control device of the internal combustion engine according to any one of claim 1 to claim 9, wherein:

the first after injection timing (ta1) is a timing with a range of 40°ATDC to 90°ATDC; and
the second after injection timing (ta2) is a timing within a range of 20°ATDC to 40°ATDC.

11. The control device of the internal combustion engine according to any one of claim 1 to claim 10, wherein the switching of the air-fuel ratio is performed when a load on the internal combustion engine is at a low load that is equal to or lower than a predetermined value.

12. The control device of the internal combustion engine according to claim 11, wherein the predetermined value is 20% of the maximum load of the internal combustion engine.

13. The control device of the internal combustion engine according to any one of claim 1 to claim 12, wherein the intake air restriction is started at the same time as the start of switching of the air-fuel ratio, and the switching of the air-fuel ratio is completed at the same time as the end of the intake air restriction.

14. The control device of the internal combustion engine according to any one of claim 1 to claim 13, wherein the switching of the air-fuel ratio is performed so as to regenerate a catalyst provided in an exhaust passage.


**Patentansprüche**

1. Steuerungsvorrichtung (100) eines Verbrennungsmotors, die konfiguriert ist, um ein Luft-Kraftstoff-Verhältnis eines Im-Zylinder-Gases von einem ersten Luft-Kraftstoff-Verhältnis für einen Normalbetrieb, das magerer als ein stöchiometrisches Verhältnis ist, auf ein zweites Luft-Kraftstoff-Verhältnis, das fetter als das stöchiometrische Verhältnis ist, zu schalten, und die konfiguriert ist, um eine Ansaugluftbegrenzung während einer Schaltdauer von dem Start des Schaltens bis zu dem Ende von diesem durchzuführen, wobei
die Steuerungsvorrichtung (100) derart konfiguriert ist, dass vor dem Start des Schaltens (t1) eine Haupteinspritzung (M), die eine vollständige Verbrennung von eingespritztem Kraftstoff zur Folge hat, zu einem Haupteinspritzungstiming, das an einem oder um einen Kompression-oberer-Totpunkt oder vor dem Kompression-oberer-Totpunkt ist, durchgeführt wird,

die Steuerungsvorrichtung (100) des Weiteren derart konfiguriert ist, dass nach dem Ende des Schaltens (t2) die Haupteinspritzung (M) zu dem Haupteinspritzungstiming durchgeführt wird und eine erste Nacheinspritzung (A1), die eine unvollständige Verbrennung von eingespritztem Kraftstoff zur Folge hat, zu einem ersten Nacheinspritzungstiming (ta1), das später als das Haupteinspritzungstiming ist, durchgeführt wird, und

die Steuerungsvorrichtung (100) des Weiteren derart konfiguriert ist, dass während der Schaltdauer (t1-t2) die Haupteinspritzung (M) zu dem Haupteinspritzungstiming durchgeführt wird und eine zweite Nacheinspritzung, die eine unvollständige Verbrennung von eingespritztem Kraftstoff zur Folge hat, zu einem zweiten Nacheinspritzungstiming (ta2), das später als das Haupteinspritzungstiming ist und früher als das erste Nacheinspritzungstiming (ta1) ist, durchgeführt wird,

die Steuerungsvorrichtung (100) des Weiteren derart konfiguriert ist, dass eine Kraftstoffeinspritzungsmenge der Haupteinspritzung nach dem Ende des Schaltens kleiner als eine Kraftstoffeinspritzungsmenge der Haupteinspritzung vor dem Starten des Schaltens gemacht wird,

die Steuerungsvorrichtung (100) des Weiteren derart konfiguriert ist, dass während der Schaltdauer die Kraftstoffeinspritzungsmenge der Haupteinspritzung reduziert wird, um sich der Menge nach dem Ende des Schaltens graduell zu nähren, und eine Menge einer Reduzierung der Kraftstoffeinspritzungsmenge der Haupteinspritzung graduell reduziert wird, wenn die Ansaugluftbegrenzung fortschreitet, und

die Steuerungsvorrichtung (100) des Weiteren derart konfiguriert ist, dass während der Schaltdauer die Menge einer Reduzierung zu jeder Berechnungszeit bestimmt wird, basierend auf einer Differenz zwischen einem tatsächlichen Wert und einem Sollwert eines Ansaugluftdrucks und einer Differenz zwischen der Kraftstoffeinspritzungsmenge der Haupteinspritzung nach dem Ende des Schaltens und der Kraftstoffeinspritzungsmenge der Haupteinspritzung während der Schaltdauer, und die Menge einer Reduzierung zu jeder Berechnungszeit größer gemacht wird, wenn mindestens eine der Differenzen, Differenz zwischen dem tatsächlichen Wert und dem Sollwert des Ansaugluftdrucks und Differenz zwischen der Kraftstoffeinspritzungsmenge der Haupteinspritzung nach dem Ende des Schaltens und der Kraftstoffeinspritzungsmenge der Haupteinspritzung während der Schaltdauer, größer ist.

2. Steuerungsvorrichtung des Verbrennungsmotors gemäß Anspruch 1, wobei, wenn die Ansaugluftbegrenzung fortschreitet, während der Schaltdauer (t1-t2) das zweite Nacheinspritzungstiming (ta2) verzögert wird, um sich dem ersten Nacheinspritzungstiming (ta1) graduell zu nähern, und eine Geschwindigkeit eines Verzögerns des Einspritzungstimings graduell verlangsamt wird.

3. Steuerungsvorrichtung des Verbrennungsmotors gemäß Anspruch 2, wobei während der Schaltdauer eine Größe einer Verzögerung zu jeder Berechnungszeit bestimmt wird, basierend auf der Differenz zwischen dem tatsächlichen Wert und dem Sollwert des Ansaugluftdrucks und einer Differenz zwischen dem zweiten Nacheinspritzungstiming und dem ersten Nacheinspritzungstiming, und die Größe einer Verzögerung zu jeder Berechnungszeit größer gemacht wird, wenn mindestens eine der Differenzen, Differenz zwischen dem tatsächlichen Wert und dem Sollwert des Ansaugluftdrucks und Differenz zwischen dem zweiten Nacheinspritzungstiming und dem ersten Nacheinspritzungstiming, größer ist.

4. Steuerungsvorrichtung des Verbrennungsmotors gemäß Anspruch 1 oder Anspruch 2, wobei eine Kraftstoffeinspritzungsmenge ($\Delta$ta2) der zweiten Nacheinspritzung (A2) kleiner als eine Kraftstoffeinspritzungsmenge ($\Delta$ta1) der ersten Nacheinspritzung (A1) ist.

5. Steuerungsvorrichtung des Verbrennungsmotors gemäß einem der Ansprüche 1 bis 4, wobei, wenn die Ansaugluftbegrenzung während der Schaltdauer fortschreitet, eine Kraftstoffeinspritzungsmenge ($\Delta$ta2) der zweiten Nacheinspritzung (A2) von einer Kraftstoffeinspritzungsmenge, die kleiner als eine Kraftstoffeinspritzungsmenge der ersten Nacheinspritzung ist, graduell erhöht wird, um sich der Kraftstoffeinspritzungsmenge ($\Delta$ta1) der ersten Nacheinspritzung (A1) graduell zu nähern, und eine Größe einer Erhöhung der Kraftstoffeinspritzungsmenge der zweiten Nacheinspritzung graduell reduziert wird.

6. Steuerungsvorrichtung des Verbrennungsmotors gemäß Anspruch 5, wobei während der Schaltdauer die Größe einer Erhöhung zu jeder Berechnungszeit bestimmt wird, basierend auf der Differenz zwischen dem tatsächlichen Wert und dem Sollwert des Ansaugluftdrucks und der Differenz zwischen dem zweiten Nacheinspritzungstiming und dem ersten Nacheinspritzungstiming, und die Größe einer Erhöhung zu jeder Berechnungszeit größer gemacht wird, wenn mindestens eine der Differenzen, Differenz zwischen dem tatsächlichen Wert und dem Sollwert des Ansaugluftdrucks und Differenz zwischen dem zweiten Nacheinspritzungstiming und dem ersten Nacheinspritzungstiming, größer ist.

**7.** Steuerungsvorrichtung des Verbrennungsmotors gemäß einem von Anspruch 1 bis Anspruch 6, wobei mindestens eines der Haupteinspritzungstimings, Haupteinspritzungstiming während der Schaltdauer und Haupteinspritzungstiming nach dem Ende des Schaltens, gemacht wird, um früher als das Haupteinspritzungstiming vor dem Start eines Schaltens zu sein.

**8.** Steuerungsvorrichtung des Verbrennungsmotors gemäß Anspruch 7, wobei das Haupteinspritzungstiming nach dem Ende eines Schaltens und das Haupteinspritzungstiming während der Schaltdauer auf dasselbe Einspritzungstiming, das früher als das Haupteinspritzungstiming vor dem Start eines Schaltens ist, festgesetzt werden.

**9.** Steuerungsvorrichtung des Verbrennnungsmotors gemäß einem von Anspruch 1 bis Anspruch 8, wobei während der Schaltdauer (t1-t2) die Kraftstoffeinspritzungsmenge der Haupteinspritzung im Wesentlichen gleich der Kraftstoffeinspritzungsmenge der Haupteinspritzung vor dem Start des Schaltens (t1) gehalten wird.

**10.** Steuerungsvorrichtung des Verbrennnungsmotors gemäß einem von Anspruch 1 bis Anspruch 9, wobei:

das erste Nacheinspritzungstiming (ta1) ein Timing mit einem Bereich von 40° ATDC bis 90° ATDC ist, und das zweite Nacheinspritzungstiming (ta2) ein Timing mit einem Bereich von 20° ATDC bis 40° ATDC ist.

**11.** Steuerungsvorrichtung des Verbrennnungsmotors gemäß einem von Anspruch 1 bis Anspruch 10, wobei das Schalten des Luft-Kraftstoff-Verhältnisses durchgeführt wird, wenn eine Last auf den Verbrennnungsmotor bei einer niedrigen Last, die gleich einem vorgegebenem Wert oder niedriger als dieser ist, ist.

**12.** Steuerungsvorrichtung des Verbrennnungsmotors gemäß Anspruch 11, wobei der vorgegebene Wert 20% von der Maximallast des Verbrennnungsmotors ist.

**13.** Steuerungsvorrichtung des Verbrennnungsmotors gemäß einem von Anspruch 1 bis Anspruch 12, wobei die Ansaugluftbegrenzung zu derselben Zeit wie der Start eines Schaltens des Luft-Kraftstoff-Verhältnisses gestartet wird und das Schalten des Luft-Kraftstoff-Verhältnisses zu derselben Zeit wie das Ende der Ansaugluftbegrenzung vervollständigt ist.

**14.** Steuerungsvorrichtung des Verbrennnungsmotors gemäß einem von Anspruch 1 bis Anspruch 13, wobei das Schalten des Luft-Kraftstoff-Verhältnisses durchgeführt wird, um einen Katalysator, der in einem Abgasdurchgang bereitgestellt ist, zu regenerieren.

**Revendications**

**1.** Dispositif de commande (100) de moteur à combustion interne, conçu pour commuter un rapport air-carburant de gaz dans les cylindres, d'un premier rapport air-carburant pour un fonctionnement normal, qui est plus pauvre qu'un rapport stoechiométrique, vers un second rapport air-carburant qui est plus riche que le rapport stoechiométrique, et est conçu pour mettre en oeuvre une restriction d'air d'admission au cours d'une période de commutation, du début à la fin de la commutation, dans lequel :

le dispositif de commande (100) est conçu de telle sorte qu'avant le début de la commutation (t1), une injection principale (M) qui se traduit par une combustion complète du carburant injecté, est effectuée selon un calage d'injection principale qui se situe au point mort haut de compression ou autour de celui-ci, ou avant le point mort haut de compression ;
le dispositif de commande (100) est conçu en outre de telle sorte qu'après la fin de la commutation (t2), l'injection principale (M) est effectuée selon le calage de l'injection principale et une première post-injection (A1) qui se traduit par une combustion incomplète du carburant injecté est effectuée selon un calage de première post-injection (ta1) qui est postérieur au calage de l'injection principale ; et
le dispositif de commande (100) est conçu en outre de telle sorte qu'au cours de la période de commutation (t1-t2), l'injection principale (M) est effectuée selon le calage de l'injection principale et une seconde post-injection (A2) qui se traduit par une combustion incomplète du carburant injecté est effectuée selon un calage de seconde post-injection (ta2) qui est postérieur au calage de l'injection principale et antérieur au calage de la première post-injection (ta1) ;

le dispositif de commande (100) est conçu en outre de telle sorte qu'une quantité d'injection de carburant de l'injection principale après la fin de la commutation est rendue moindre qu'une quantité d'injection de carburant de l'injection principale avant le début de la commutation ;

le dispositif de commande (100) est conçu en outre de telle sorte qu'au cours de la période de commutation, la quantité d'injection de carburant de l'injection principale est réduite, de manière à se rapprocher progressivement de la quantité après la fin de la commutation, et une quantité de réduction de la quantité d'injection de carburant de l'injection principale est réduite progressivement à mesure que la restriction d'air d'admission se poursuit ; et

le dispositif de commande (100) est conçu en outre de telle sorte qu'au cours de la période de commutation, la quantité de réduction à chaque instant de calcul est déterminée sur la base d'une différence entre une valeur réelle et une valeur cible d'une pression d'air d'admission et d'une différence entre la quantité d'injection de carburant de l'injection principale après la fin de la commutation et la quantité d'injection de carburant de l'injection principale au cours de la période de commutation, et la quantité de réduction à chaque instant de calcul est augmentée à mesure qu'au moins la différence entre la valeur réelle et la valeur cible de la pression d'air d'admission est plus grande ou la différence entre la quantité d'injection de carburant de l'injection principale après la fin de la commutation et la quantité d'injection de carburant de l'injection principale au cours de la période de commutation est plus grande.

2. Dispositif de commande du moteur à combustion interne selon la revendication 1, dans lequel, à mesure que la restriction d'air d'admission se poursuit, au cours de la période de commutation (t1-t2), le calage de la seconde post-injection (ta2) est retardé, de manière à se rapprocher progressivement du calage de la première post-injection (ta1), et une vitesse de retardement du calage de l'injection est progressivement ralentie.

3. Dispositif de commande du moteur à combustion interne selon la revendication 2, dans lequel, au cours de la période de commutation, une grandeur de retard à chaque instant de calcul est déterminée sur la base de la différence entre la valeur réelle et la valeur cible de la pression d'air d'admission et d'une différence entre le calage de la seconde post-injection et le calage de la première post-injection, et la grandeur de retard à chaque instant de calcul est rendue augmentée à mesure qu'au moins la différence entre la valeur réelle et la valeur cible de la pression d'air d'admission augmente ou la différence entre le calage de la seconde post-injection et le calage de la première post-injection augmente.

4. Dispositif de commande du moteur à combustion interne selon la revendication 1 ou la revendication 2, dans lequel une quantité d'injection de carburant ($\Delta$ta2) de la seconde post-injection (A2) est inférieure à une quantité d'injection de carburant ($\Delta$ta1) de la première post-injection (A1).

5. Dispositif de commande du moteur à combustion interne selon l'une quelconque des revendications 1 à 4, dans lequel, à mesure que la restriction d'air d'admission se poursuit au cours de la période de commutation, une quantité d'injection de carburant ($\Delta$ta2) de la seconde post-injection (A2) augmente progressivement à partir d'une quantité d'injection de carburant qui est inférieure à une quantité d'injection de carburant de la première post-injection, de manière à se rapprocher progressivement de la quantité d'injection de carburant ($\Delta$ta1) de la première post-injection (A1), et une quantité d'augmentation de la quantité d'injection de carburant de la seconde post-injection est progressivement réduite.

6. Dispositif de commande du moteur à combustion interne selon la revendication 5, dans lequel, au cours de la période de commutation, la quantité d'augmentation à chaque instant de calcul est déterminée sur la base de la différence entre la valeur réelle et la valeur cible de la pression d'air d'admission et de la différence entre le calage de la seconde post-injection et le calage de la première post-injection, et la quantité d'augmentation à chaque instant de calcul est augmentée à mesure qu'au moins la différence entre la valeur réelle et la valeur cible de la pression d'air d'admission augmente ou la différence entre le calage de la seconde post-injection et le calage de la première post-injection augmente.

7. Dispositif de commande du moteur à combustion interne selon l'une quelconques des revendications 1 à 6, dans lequel il est fait en sorte qu'au moins l'un du calage de l'injection principale au cours de la période de commutation et du calage de l'injection principale après la fin de la commutation soit antérieur au calage de l'injection principale avant le début de la commutation.

8. Dispositif de commande du moteur à combustion interne selon la revendication 7, dans lequel le calage de l'injection principale après la fin de la commutation et le calage de l'injection principale au cours de la période de commutation sont réglés au même calage d'injection qui est antérieur au calage de l'injection principale avant le début de la commutation.

**9.** Dispositif de commande du moteur à combustion interne selon l'une quelconque des revendications 1 à 8, dans lequel au cours de la période de commutation (t1-t2), la quantité d'injection de carburant de l'injection principale est maintenue sensiblement égale à la quantité d'injection de carburant de l'injection principale avant le début de la commutation (t1).

**10.** Dispositif de commande du moteur à combustion interne selon l'une quelconque des revendications 1 à 9, dans lequel :

le calage de la première post-injection (ta1) est un calage compris dans une plage de 40° APMH à 90° APMH ; et le calage de la seconde post-injection (ta2) est un calage compris dans une plage de 20° APMH à 40° APMH.

**11.** Dispositif de commande du moteur à combustion interne selon l'une quelconque des revendications 1 à 10, dans lequel la commutation du rapport air-carburant est effectuée lorsqu'une charge du moteur à combustion interne est une faible charge qui est inférieure ou égale à une valeur prédéterminée.

**12.** Dispositif de commande du moteur à combustion interne selon la revendication 11, dans lequel la valeur prédéterminée est égale à 20 % de la charge maximale du moteur à combustion interne.

**13.** Dispositif de commande du moteur à combustion interne selon l'une quelconque des revendications 1 à 12, dans lequel la restriction d'air d'admission est commencée en même temps que le début de la commutation du rapport air-carburant, et la commutation du rapport air-carburant s'achève en même temps que la fin de la restriction d'air d'admission.

**14.** Dispositif de commande du moteur à combustion interne selon l'une quelconque des revendications 1 à 13, dans lequel la commutation du rapport air-carburant est effectuée de manière à régénérer un catalyseur placé dans un passage d'échappement.

# FIG.1

EP 2 591 222 B1

# FIG.2

## COMPARATIVE EXAMPLE

F I G . 3A

ACTUAL VALUE

TARGET VALUE

INTAKE AIR PRESSURE

t1    t2    TIME t

F I G . 3B

t < t1

$\tau m$  M

HEAT RELEASE RATE

$\Delta \tau m$    TDC    CRANK ANGLE

F I G . 3C

t1 ≤ t < t2

$\tau m$  M    $\tau a2$  A2

HEAT RELEASE RATE

$\Delta \tau m$    TDC    $\Delta \tau a2$    CRANK ANGLE

F I G . 3D

t2 ≤ t

$\tau m$  M    $\tau a1$

HEAT RELEASE RATE

A1

$\Delta \tau m$    TDC    $\Delta \tau a1$    CRANK ANGLE

F I G . 3E

TORQUE

t1    t2    TIME t

22

FIG.4A

FIG.4B
t < t1

FIG.4C
t = t3

FIG.4D
t = t4

FIG.4E
t2 ≤ t

FIG.4F

FIG.5A

FIG.5B
t < t1

FIG.5C
t = t3

FIG.5D
t = t4

FIG.5E
t2 ≤ t

FIG.5F

24

EP 2 591 222 B1

**FIG.6A**

ACTUAL VALUE

TARGET VALUE

INTAKE AIR PRESSURE

t1 t3 t4 t2    TIME t

**FIG.6B**

t < t1

HEAT RELEASE RATE

τm M

Δτm  TDC    CRANK ANGLE

**FIG.6C**

t = t3

HEAT RELEASE RATE

τm M    τa2 A2

Δτm  TDC    Δτa2  CRANK ANGLE

**FIG.6D**

t = t4

HEAT RELEASE RATE

τm M    τa2 A2

Δτm  TDC    Δτa2  CRANK ANGLE

**FIG.6E**

t2 ≤ t

HEAT RELEASE RATE

τm M    τa1    A1

Δτm  TDC    Δτa1  CRANK ANGLE

**FIG.6F**

TORQUE

t1    t2    TIME t

25

# FIG.7

# F I G . 8

# F I G . 9

# F I G . 10

# F I G . 11

# F I G . 12

```
         ┌──────────────┐
         (    START     )
         └──────┬───────┘
                │
                ▼
   ┌────────────────────────┐
   │ CALCULATE Z1 FROM τa2   ├──S101
   └────────────┬───────────┘
                │
                ▼
   ┌────────────────────────┐
   │   Za2 = Z1 × Δτa2       ├──S102
   └────────────┬───────────┘
                │
                ▼
   ┌────────────────────────┐
   │      Zm = Zt − Za2      ├──S103
   └────────────┬───────────┘
                │
                ▼
   ┌────────────────────────┐
   │ CALCULATE Z2 FROM τm    ├──S104
   └────────────┬───────────┘
                │
                ▼
   ┌────────────────────────┐
   │      Δτm = Zm/Z2        ├──S105
   └────────────┬───────────┘
                │
                ▼
         ┌──────────────┐
         (   RETURN     )
         └──────────────┘
```

# F I G . 13

```
                ┌──────────────┐
                │    START     │
                └──────┬───────┘
                       │
                       ▼
        ┌──────────────────────────┐
        │  CALCULATE Z2 FROM τm     │──S201
        └──────────────┬───────────┘
                       │
                       ▼
        ┌──────────────────────────┐
        │      Zm = Z2 × Δτm        │──S202
        └──────────────┬───────────┘
                       │
                       ▼
        ┌──────────────────────────┐
        │      Za2 = Zt - Zm        │──S203
        └──────────────┬───────────┘
                       │
                       ▼
        ┌──────────────────────────┐
        │  CALCULATE Z1 FROM τa2    │──S204
        └──────────────┬───────────┘
                       │
                       ▼
        ┌──────────────────────────┐
        │      Δτa2 = Za2/Z1        │──S205
        └──────────────┬───────────┘
                       │
                       ▼
                ┌──────────────┐
                │    RETURN    │
                └──────────────┘
```

**EP 2 591 222 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008309080 A
- EP 1087122 A
- EP 1245813 A